# DEMANDE DE BREVET EUROPEEN

(11) **EP 4 733 869 A1**
(43) Date de publication de la demande: **29.04.2026**
(21) Numéro de dépôt: 24207965.5
(22) Date de dépôt: 22.10.2024
(51) Int. Cl.: G05B 19/401, B23Q 17/12, B23Q 17/22, G05B 19/404

(54) **PROCÉDÉ DE RÉDUCTION DE BALOURD RÉSIDUEL D'UNE BROCHE D'USINAGE**

(71) Demandeur: ETA SA Manufacture Horlogère Suisse, 2540 Grenchen (CH)
(72) Inventeur: PHAM, Patric, 3427 Utzenstorf (CH); DONZÉ, Christophe, 2542 Pieterlen (CH); RÖTHLISBERGER, Joël, 2540 Grenchen (CH); JAGGI, Noé, 2523 Lignières (CH)
(74) Mandataire: ICB SA

(57) **Abrégé**

L'invention concerne un procédé de réduction d'un balourd résiduel d'une broche (10) de machine-outil à commande numérique, laquelle broche (10) étant destinée à recevoir en fixation un outil (20) par l'intermédiaire d'un porte-outil, le procédé étant caractérisé en ce qu'il comporte :
- Une phase d'acquisition de données dans laquelle au moins deux opérations de mesure sont réalisées, dans chacune des opérations de mesure la broche (10) et l'outil (20) sont agencés l'un par rapport à l'autre selon des angles différents, et dans chacune desquelles la broche (10) est mise en rotation par exemple à une vitesse supérieure à 10krpm et les vibrations auxquelles la broche (10) est soumise sont mesurées et enregistrées dans une base de données sous la forme d'une valeur V0,..., Vn représentative de leur intensité, chacune des valeurs V0,..., Vn étant associée avec une valeur angulaire θ0,..., θn représentative de l'angle formé entre la broche (10) et l'outil (20) lors de la mesure,
- Une étape de détermination, dans la base de données issues des mesures réalisées, d'une position angulaire cible de la broche (10) relativement à l'outil (20), la position angulaire cible présentant une valeur angulaire cible θx correspondant à la valeur angulaire θ0,..., θn associée avec la valeur V0,..., Vn minimale,
- Une étape de positionnement dans laquelle la broche (10) et l'outil (20) sont orientés l'un par rapport à l'autre selon la valeur angulaire cible θx.

## Description

### Domaine technique de l'invention

L'invention relève du domaine des machines-outils, notamment des machines-outils à commandes numériques.

Plus particulièrement, l'invention concerne un procédé de réduction de balourd résiduel d'une broche d'usinage.

### Arrière-plan technologique

Afin d'usiner une pièce, notamment par fraisage, les machines-outils à commandes numériques (MOCN) possèdent une broche, qui est un arbre mobile en rotation par rapport à un bâti grâce à des paliers, destinée à accueillir un porte-outil dans lequel est fixé un outil. Lorsqu'elle est entraînée en rotation, la broche transmet donc le mouvement de rotation à l'outil afin d'usiner une pièce.

L'usinage d'une pièce complète nécessite généralement plusieurs outils, dont les formes et/ou dimensions sont différentes. Les MOCN peuvent donc posséder un magasin d'outils dans lequel sont stockés tous les outils et leur porte-outil nécessaires à la réalisation d'une pièce complète. Les outils sont extraits du magasin d'outils et montés dans la broche par un bras manipulateur, également apte à extraire un outil de la broche et à le disposer dans le magasin porte-outils.

Dans la pratique, les outils sont montés manuellement par un opérateur dans leur porte-outil, en dehors de la machine, sur un établi par exemple. Une fois l'outil fixé au porte-outil, l'opérateur intègre manuellement le porte-outil dans un logement du magasin d'outils de la MOCN. Ces opérations manuelles réalisées par l'opérateur peuvent conduire à un risque de montage non équilibré, et par conséquent occasionner un balourd lors de la rotation de la broche.

En outre, des incertitudes sur l'équilibre en rotation de l'ensemble constitué par l'outil, le porte-outil et la broche peuvent venir de l'assemblage des éléments constitutifs de la broche et des paliers par l'intermédiaire desquels la broche est fixée de manière mobile en rotation au bâti de la MOCN. De manière analogue, les outils et porte-outils peuvent présenter des défauts d'équilibrage.

En outre, l'utilisation d'outils asymétriques est particulièrement délicate du fait de leur conception. En effet, le centre d'inertie de ces outils n'est pas sur leur axe de rotation du fait de leur asymétrie, ce qui occasionne du balourd.

En synthèse, il existe un nombre important de facteurs pouvant être à l'origine d'un balourd lors de la rotation de la broche, et de ce fait, la subsistance d'un balourd résiduel est quasi systématique.

La présente invention propose une solution pour réduire le balourd de la broche d'une MOCN.

### Résumé de l'invention

L'invention concerne, à cet effet, un procédé de réduction d'un balourd résiduel d'une broche de machine-outil à commande numérique, laquelle broche étant destinée à recevoir en fixation un outil par l'intermédiaire d'un porte-outil. Il y a lieu de noter que, dans le présent texte, l'ensemble formé par l'outil et le porte-outil est désigné par le terme générique « outil » dans la mesure où dans la totalité de la mise en oeuvre du procédé selon l'invention, l'outil et le porte-outil ne sont pas désassemblés et conservent ainsi leur position l'un par rapport à l'autre.

Le procédé selon l'invention comporte une phase d'acquisition de données dans laquelle au moins deux opérations de mesure sont réalisées, dans chacune desquelles la broche et l'outil sont agencés l'un par rapport à l'autre selon des angles différents. Par ailleurs, dans chacune de ces opérations, la broche est mise en rotation, par exemple à une vitesse supérieure à 10krpm, et les vibrations auxquelles la broche est soumise sont mesurées et enregistrées dans une base de données sous la forme d'une valeur V₀,..., Vₙ représentative de leur intensité. Chacune des valeurs V₀,... , Vₙ est associée avec une valeur angulaire θ₀,.., θₙ représentative de l'angle formé entre la broche et l'outil lors de la mesure.

Le procédé comporte également une étape de détermination, dans la base de données issues des mesures réalisées, d'une position angulaire cible de la broche relativement à l'outil, la position angulaire cible présentant une valeur angulaire cible θₓ correspondant à la valeur angulaire θ₀,..., θₙ associée avec la valeur V₀,..., Vₙ minimale.

Une étape de positionnement dans laquelle la broche et l'outil sont orientés l'un par rapport à l'autre selon la valeur angulaire cible θₓ.

Dans des modes particuliers de mise en oeuvre, l'invention peut comporter en outre l'une ou plusieurs des caractéristiques suivantes, prises isolément ou selon toutes les combinaisons techniquement possibles.

Dans des modes particuliers de mise en oeuvre, la phase d'acquisition de données est mise en oeuvre de sorte qu'au moins trois opérations de mesure sont réalisées et lors desquelles la broche et l'outil sont agencés l'un par rapport à l'autre de sorte que les valeurs angulaires θ₀,.., θₙ correspondent à des angles régulièrement répartis ou répartis de manière irrégulière dans un intervalle de 360 degrés, avec θ₀ = 0 degré et θₙ ≤ 360 degrés.

Dans des modes particuliers de mise en oeuvre, les vibrations auxquelles la broche est soumise sont mesurées par un capteur accéléromètre, chacune des valeurs V₀,..., Vₙ correspondant à une déplacement, une vitesse de déplacement ou une accélération d'un point de l'outil lorsque la broche est en rotation.

Dans des modes particuliers de mise en oeuvre, lors de la phase d'acquisition de données, entre deux mesures successives, la broche est immobilisée, l'outil est dégagé de la broche par un bras manipulateur, la broche est pivotée selon un angle correspondant à la différence entre deux valeurs angulaires successives θ₀,.., θₙ, puis l'outil est engagé dans la broche dans une position angulaire identique à celle qu'il occupait lors de son dégagement, selon un référentiel lié à un bâti de la machine-outil à commande numérique identique.

Dans des modes particuliers de mise en oeuvre, la phase d'acquisition de données et l'étape de détermination sont réalisées pour plusieurs outils, pour chacun desquels une valeur angulaire cible θₓ propre est mémorisée.

### Brève description des figures

D'autres caractéristiques et avantages de l'invention apparaîtront à la lecture de la description détaillée suivante donnée à titre d'exemple nullement limitatif, en référence aux dessins annexés dans lesquels :
- les figures 1a à 1f représentent schématiquement une vue de section d'une broche dans laquelle est engagé un outil, la broche et l'outil étant agencés l'un par rapport à l'autre selon des angles différents dans chacune desdites figures, pour la mise en oeuvre d'une étape d'acquisition de données d'un procédé de réduction d'un balourd résiduel d'une broche de machine-outil à commande numérique ;
- la figure 2 représente un tableau des données mesurées lors de l'étape d'acquisition de données ;
- la figure 3 représente un graphique radar des données du tableau de la figure 2.

On note que les figures ne sont pas nécessairement dessinées à l'échelle pour des raisons de clarté.

### Description détaillée de l'invention

La présente invention concerne un procédé de réduction d'un balourd résiduel d'une broche 10 de machine-outil à commande numérique, appelé « MOCN » dans la suite du texte. De manière connue en soi, la broche 10 est destinée à recevoir en fixation un outil 20 par l'intermédiaire d'un porte-outil (non représenté sur les figures), par exemple pour la réalisation d'opérations d'usinage. Un tel outil 20 s'étend selon un axe longitudinal et est formé par exemple par une fraise. Dans le présent texte, l'ensemble formé par l'outil 20 et le porte-outil est désigné seulement par le terme « outil » afin de simplifier la lecture.

Le procédé selon l'invention comprend plusieurs phases, dont une première phase d'acquisition de données, dans laquelle au moins deux opérations de mesure sont réalisées. Dans un exemple de réalisation de l'invention représenté sur les figures, six opérations de mesure sont réalisées.

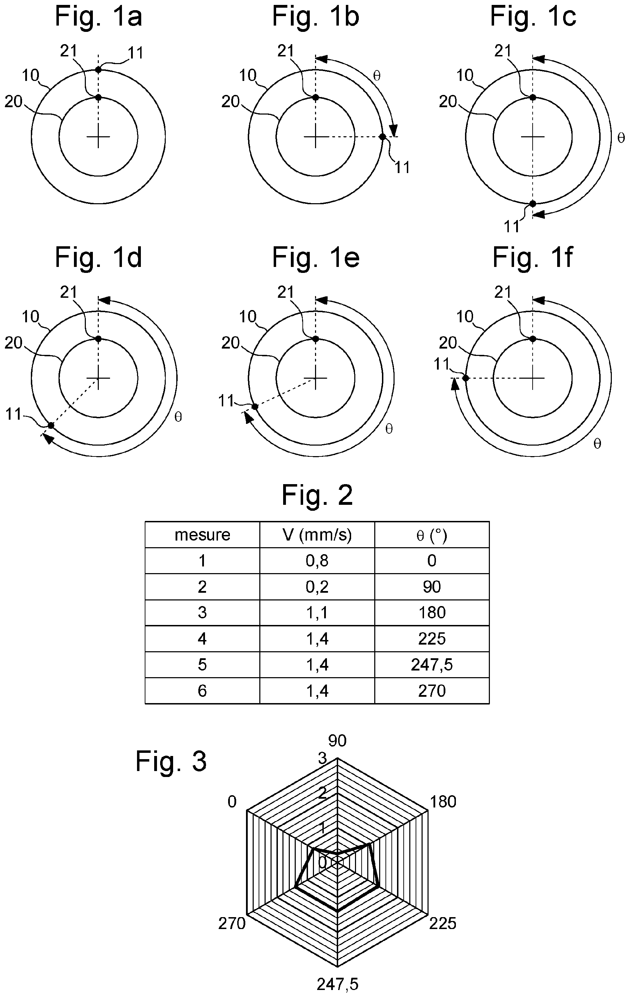

Dans chacune des opérations de mesure, la broche 10 et l'outil 20 sont agencés l'un par rapport à l'autre selon des angles différents. Il est évident que l'angle dont il est question présente pour origine l'axe longitudinal de l'outil 20 et qu'il s'étend dans un plan perpendiculaire à cet axe longitudinal. En d'autres termes, si l'on considère un point fixe 21 sur l'outil 20 et un point fixe 11 sur la broche 10, tel que représenté schématiquement sur les figures 1a à 1f, à chaque opération de mesure, l'outil 20 est monté dans la broche 10 de telle sorte que les points respectifs de l'outil 20 et de la broche 10 forment un angle différent l'un par rapport à l'autre.

Lors de chacune des opérations de mesure, la broche 10 est mise en rotation préférentiellement à une vitesse supérieure à 1 0krpm, voire à une vitesse égale à 30krpm ou à 60krpm, puis les vibrations auxquelles la broche 10 est soumise sont mesurées et enregistrées dans une base de données. Ces vibrations caractérisent le balourd de la broche 10. Plus précisément, comme représenté dans le tableau de la figure 2, les vibrations sont enregistrées sous la forme d'une valeur V₀,..., Vₙ représentative de leur intensité, chacune des valeurs V₀,..., Vₙ étant associée avec une valeur angulaire θ₀,.., θₙ représentative de l'angle formé entre la broche 10 et l'outil 20 lors de l'opération de mesure dans laquelle l'intensité des vibrations est enregistrée. Les données de la figure 2 sont représentées sur le graphique radar de la figure 3.

Dans le procédé selon l'invention, les vibrations peuvent être mesurées par tout organe de mesure apte à évaluer une grandeur physique, tel qu'un capteur accéléromètre, un capteur optique, un capteur inductif, un capteur capacitif, une jauge extensométrique, un microphone, etc. Préférentiellement, un capteur accéléromètre est utilisé pour réaliser des mesures lors des opérations de mesure. Les valeurs V₀,..., Vₙ sont donc exprimées en mm/s dans le tableau de la figure 2. Alternativement, les valeurs V₀,..., Vₙ peuvent être exprimées en toutes dimensions appropriées, selon l'organe de mesure utilisé, par exemple selon une accélération (mm/s²) ou un déplacement (mm).

Dans l'exemple de mise en oeuvre de la présente invention décrit dans le présent texte, entre deux opérations de mesure successives, afin de modifier la valeur angulaire θ₀,.., θₙ relative entre la broche 10 et l'outil 20, seule la broche 10 est pivotée, l'outil 20 restant dans une position angulaire fixe. Plus particulièrement, lorsqu'une opération de mesure est achevée, avant de débuter l'opération de mesure suivante, l'outil 20 est retiré de la broche 10 par un bras manipulateur, de manière connue en soi par l'homme du métier, et la broche 10 est pivotée d'un angle prédéterminé pour atteindre la valeur angulaire θ₀,.., θₙ prévue pour ladite opération de mesure suivante. L'outil 20 est ensuite engagé dans la broche 10 par le bras manipulateur, en occupant la même orientation qu'il occupait lorsqu'il a été retiré selon un référentiel lié à un bâti de la MOCN.

Les valeurs angulaires θ₀,.., θₙ correspondent donc à des positions angulaires particulières de la broche 10, dans l'exemple préféré de réalisation de l'invention. Alternativement, il peut être envisagé de pivoter uniquement l'outil 20 après qu'il ait été retiré de la broche 10, ou de pivoter à la fois l'outil 20 et la broche 10, de sorte qu'ils présentent une valeur angulaire θ₀,.., θₙ relative l'un par rapport à l'autre.

Il y a lieu de noter que les valeurs angulaires θ₀,.., θₙ sont prédéfinies, leur pas, c'est-à-dire la distance entre deux valeurs angulaires choisies dans deux opérations de mesure successives, dépendant de la résolution des mesures de vibrations souhaitée. Comme le montrent le tableau de la figure 2 et le graphique de la figure 3, le pas des valeurs angulaires θ₀,.., θₙ entre deux opérations de mesure successives peut être de 90°, 45°, 22,5° ou peut être de tout autre angle compris entre 0° et 360°. Le pas peut être identique ou non entre l'ensemble des mesures réalisées.

Le procédé comporte ensuite une étape de détermination d'une position angulaire cible de la broche 10 relativement à l'outil 20, la position angulaire cible présentant une valeur angulaire cible θₓ correspondant à la valeur angulaire θ₀, ... , θₙ associée avec la valeur V₀, ... , Vₙ minimale dans la base de données issues des mesures réalisées. En d'autres termes, les valeurs V₀,... , Vₙ sont comparées de sorte à identifier la valeur minimale, puis la valeur angulaire θ₀,..., θₙ associée à la valeur minimale d'intensité des vibrations est sélectionnée. Cette valeur angulaire sélectionnée représente la valeur cible θₓ.

Dans l'exemple représenté dans le tableau de la figure 2 et sur le graphique de la figure 3, la valeur minimale d'intensité des vibrations a été mesurée lors de la deuxième mesure et correspond à 0,2 mm/s, à une valeur angulaire de 90°. La position angulaire cible θₓ est donc égale à 90°. La valeur angulaire cible θₓ est particulièrement remarquable sur le graphique de la figure 3, sur lequel la courbe en gras représentant la valeur V₀,... , Vₙ présente un point d'inflexion coïncidant avec un segment représentant 90°.

Cette étape est réalisée préférentiellement par une unité de traitement informatique de la MOCN. Une telle unité de traitement, par exemple constituée par un microcontrôleur ou un microprocesseur, et ses interactions avec les différents organes de la MOCN sont connus de l'homme du métier, et ne sont par conséquent pas décrits en détail dans le présent texte.

Par la suite, la broche 10 et l'outil 20 sont orientés l'un par rapport à l'autre lors d'une étape de positionnement selon la valeur angulaire cible θₓ. Préférentiellement, le bras manipulateur retire l'outil 20 de la broche 10, cette dernière étant ensuite orientée de sorte à occuper une position angulaire correspondant à la valeur angulaire cible θₓ. L'outil 20 est alors engagé par le bras manipulateur dans la broche 10 et est prêt à être utilisé pour des opérations d'usinage.

De manière générale, la broche 10 et le bras manipulateur sont entraînés en déplacement par des moteurs électriques pilotés par des consignes de commande générées par l'unité de traitement, de façon connue de l'homme du métier.

Le procédé selon l'invention peut avantageusement être mis en oeuvre par un centre d'usinage comprenant un magasin d'outils, le bras manipulateur et la MOCN.

En particulier, le magasin d'outils peut comporter une pluralité d'outils pour chacun desquels une valeur angulaire cible θₓ qui lui est propre est mémorisée. Ainsi, avant le chargement d'un outil dans la broche 10 afin de réaliser une opération d'usinage particulière, la broche 10 est orientée de sorte à présenter une position angulaire relative à l'outil qu'elle va recevoir, telle qu'elle permet de minimiser le balourd de ladite broche 10 équipée dudit outil.

En résumé, le procédé selon l'invention doit être exécuté dès qu'un nouvel outil est intégré dans le magasin d'outils, de sorte à enregistrer la valeur angulaire cible θₓ à appliquer à la broche 10 avant le chargement de l'outil associé.

Avantageusement, il n'est pas nécessaire de mettre en oeuvre le procédé selon l'invention à chaque fois qu'un outil est destiné à être utilisé dans la mesure où la valeur angulaire cible θₓ qui lui correspond est mémorisée. Toutefois, afin de contrôler que le niveau de vibration de la broche 10 corresponde toujours aux valeurs d'optimisation d'équilibrage préalablement mesurées, il est envisageable de réitérer la mise en oeuvre le procédé selon l'invention après une durée prédéfinie d'utilisation de l'outil 20 par exemple.

De manière plus générale, il est à noter que les modes de mise en oeuvre et de réalisation considérés ci-dessus ont été décrits à titre d'exemples non limitatifs, et que d'autres variantes sont par conséquent envisageables.

## Revendications

1. Procédé de réduction d'un balourd résiduel d'une broche (10) de machine-outil à commande numérique, la broche (10) étant destinée à recevoir en fixation un outil (20) par l'intermédiaire d'un porte-outil, le procédé étant **caractérisé en ce qu'**il comporte :
- Une phase d'acquisition de données dans laquelle au moins deux opérations de mesure sont réalisées, dans chacune des opérations de mesures la broche (10) et l'outil (20) sont agencés l'un par rapport à l'autre selon des angles différents, et dans chacune desquelles la broche (10) est mise en rotation et les vibrations auxquelles la broche (10) est soumise sont mesurées et enregistrées dans une base de données sous la forme d'une valeur V0,..., Vn représentative de leur intensité, chacune des valeurs V0,..., Vn étant associée avec une valeur angulaire θ0,.., θn représentative de l'angle formé entre la broche (10) et l'outil (20) lors de la mesure,
- Une étape de détermination, dans la base de données issues des mesures réalisées, d'une position angulaire cible de la broche (10) relativement à l'outil (20), la position angulaire cible présentant une valeur angulaire cible θx correspondant à la valeur angulaire θ0, ... , θn associée avec la valeur V0, ... , Vn minimale,
- Une étape de positionnement dans laquelle la broche (10) et l'outil (20) sont orientés l'un par rapport à l'autre selon la valeur angulaire cible θx.

2. Procédé selon la revendication 1, dans lequel la phase d'acquisition de données est mise en oeuvre de sorte qu'au moins trois opérations de mesure sont réalisées et lors desquelles la broche (10) et l'outil (20) sont agencés l'un par rapport à l'autre de sorte que les valeurs angulaires θ₀,.., θₙ correspondent à des angles régulièrement répartis dans un intervalle de 360 degrés, avec θ₀ = 0 degré et θn ≤ 360 degrés.

3. Procédé selon la revendication 1, dans lequel la phase d'acquisition de données est mise en oeuvre de sorte qu'au moins trois opérations de mesure sont réalisées et lors desquelles la broche (10) et l'outil (20) sont agencés l'un par rapport à l'autre de sorte que les valeurs angulaires θ₀,.., θₙ correspondent à des angles répartis de manière irrégulière dans un intervalle de 360 degrés, avec θ₀ = 0 degré et θₙ ≤ 360 degrés.

4. Procédé selon l'une des revendications 1 à 3, dans lequel les vibrations auxquelles la broche (10) est soumise sont mesurées par un capteur accéléromètre, chacune des valeurs V₀,..., Vₙ correspondant à un déplacement, une vitesse de déplacement ou une accélération d'un point de l'outil (20) lorsque la broche (10) est en rotation.

5. Procédé selon l'une des revendications 1 à 4, dans lequel lors de la phase d'acquisition de données, entre deux mesures successives, la broche (10) est immobilisée, l'outil (20) est dégagé de la broche (10) par un bras manipulateur, la broche (10) est pivotée selon un angle correspondant à la différence entre deux valeurs angulaires successives θ₀,.., θₙ, puis l'outil (20) est engagé dans la broche (10) dans une position angulaire identique à celle qu'il occupait lors de son dégagement, selon un référentiel lié à un bâti de la machine-outil à commande numérique identique.

6. Procédé selon l'une des revendications 1 à 5, dans lequel la phase d'acquisition de données et l'étape de détermination sont réalisées pour plusieurs outils, pour chacun desquels une valeur angulaire cible θₓ propre est mémorisée.
